# EUROPEAN PATENT APPLICATION

(11) **EP 4 733 123 A1**
(43) Date of publication of application: **29.04.2026**
(21) Application number: 24844323.6
(22) Date of filing: 09.05.2024
(51) Int. Cl.: B60L 53/00, B60L 58/14, B60L 58/15

(54) **BATTERY CHARGING METHOD, ELECTRONIC DEVICE, AND ELECTRIC DEVICE**

(30) Priority: 21.07.2023 CN 202310911922
(71) Applicant: Sunwoda Mobility Energy Technology Co., Ltd., Shenzhen, Guangdong 518107 (CN)
(72) Inventor: ZHANG, Xia, Shenzhen, Guangdong 518107 (CN); TANG, Xingyu, Shenzhen, Guangdong 518107 (CN); AI, Dengjun, Shenzhen, Guangdong 518107 (CN)
(74) Representative: Elzaburu S.L.P.
(86) International application number: PCT/CN2024/092015
(87) International publication number: WO 2025/020627

(57) **Abstract**

An embodiment of the present application provides a battery charging method, an electronic device, and an electric device. The charging method provided by the present application performs alternate charge and discharge cycles with high and low currents during the fast-charging-cycle process, which can eliminate polarization caused by high-current fast charging with only a slight increase in charging duration, improve interface lithium plating, prevent abnormal battery cell voltage plunging phenomena, and balance regional SOC differences at the interface caused by fast charging. Furthermore, low-current charging can reduce temperature rise differences within the battery cell, reduce regional overcharging and over-discharging phenomena, improve lithium plating, and also enhance the usable life of the battery, solving the problem that the existing charging method cannot improve lithium plating on the negative electrode of lithium batteries while ensuring fast charging performance.

## Description

The present application claims priority to Chinese Patent Application No. 202310911922.7, filed with the China National Intellectual Property Administration on July 21, 2023, and entitled "BATTERY CHARGING METHOD AND ELECTRIC DEVICE", which is hereby incorporated by reference in its entirety.

### TECHNICAL FIELD

The present application relates to the field of battery control technology, and in particular, to a battery charging method, an electronic device, and an electric device.

### BACKGROUND

Currently, to enhance the user experience of vehicle usage, the demand for fast charging of electric vehicle is continuously increasing, and the charging rate of batteries is constantly rising.

Existing methods to improve fast charging include pulse charging, variable current charging, variable voltage charging and so on, which can increase the effective fast charging time to 10 to 30 minutes, greatly meeting users' fast charging needs.

However, these fast charging methods can cause significant polarization in lithium batteries. Long-term use can easily lead to lithium plating on the negative electrode of the lithium battery, affecting the battery's service life.

### SUMMARY

The technical problem to be solved by the present application is to provide a battery charging method, an electronic device, and an electric device, so as to solve the problem that existing charging methods cannot improve lithium plating on the battery negative electrode while ensuring fast charging performance.

In order to solve the above problems, the present application is implemented through the following technical solution.

The present application provides a charging method of battery, which includes:
charging a battery according to a fast-charging-cycle mode;
where, the fast-charging-cycle mode includes the following steps:
   S111: pre-charging the battery at a first current value for a first duration T1, where 0s≤T1≤5s, and the first current value is 0.1C to 0.5C;
   S112: after pre-charging the battery, formally charging the battery at a second current value for a second duration T2, where 0s<T2≤120s, and the second current value is 1C to 5C;
   S113: after formally charging the battery, pre-discharging the battery at a third current value for a third duration T3, where 3s≤T3≤10s, and the third current value is 0.01C to 0.1C;
   S114: after pre-discharging the battery, if a voltage of the battery is lower than a preset charging cut-off voltage, continuing to execute steps S111 to S113 until the voltage of the battery reaches the preset charging cut-off voltage.

Furthermore, in the charging method, prior to pre-charging the battery at the first current value for the first duration T1, the method further includes the following steps:
when a fast charging count n of the battery that is charged according to the fast-charging-cycle mode is greater than a fast charging count threshold N, assessing a risk of lithium plating of the battery:
if the battery has no risk of lithium plating, continuing to execute the step of charging the battery according to the fast-charging-cycle mode;
if the battery has the risk of lithium plating, switching to a slow-charging-cycle mode for charging the battery.

Further, in the charging method, assessing the risk of lithium plating of the battery includes:
when n-N is an integer multiple of m, assessing the risk of lithium plating of the battery according to a historical discharge capacity of the battery; where m is a fast charging count between two adjacent assessments of the risk of lithium plating of the battery, and n>m.

Furthermore, in the charging method, assessing the risk of lithium plating of the battery according to the historical discharge capacity of the battery includes:
determining a discharge capacity Cₙ₋ₘ after the (n-m)th fast-charging-cycle and a discharge capacity Cₙ after the nth fast-charging-cycle according to the historical discharge capacity of the battery;
calculating a current capacity cycle change rate K1 of the battery according to (Cₙ₋ₘ-Cₙ)/m;
defining this capacity cycle change rate as a baseline capacity cycle change rate K2 when the current capacity cycle change rate K1 of the battery is greater than 0 for the first time, according to the historical discharge capacity of the battery;
assessing the risk of lithium plating of the battery according to the current capacity cycle change rate K1 and the baseline capacity cycle change rate K2.

Further, in the charging method, assessing the risk of lithium plating of the battery according to the current capacity cycle change rate K1 and the baseline capacity cycle change rate K2 includes:
determining that the battery has the risk of lithium plating when K1>x*K2, where x=1.01 to 1.05.

Further, prior to charging the battery according to the fast-charging-cycle mode, the method further includes:
updating an initial value of the second current value according to the current capacity cycle change rate K1 and the baseline capacity cycle change rate K2, the updating being performed in one of the following patterns:
pattern 1: when K1≤K2, updating the second current value to make Ibₙ= Ibₙ₋ₘ;
pattern 2: when K2≤K1≤xK2, updating the second current value to make Ibₙ=(1-K1)*Ib;
pattern 3: when K1≥xK2, updating the second current value to make Ibₙ=(1-K1)*Ib *Y;
where, Ib=α*C, K1 represents the current capacity cycle change rate, K2 represents the baseline capacity cycle change rate, C represents a rated capacity, α represents a lithium-plating-free coefficient, n represents a cycle number of fast-charging-cycle, and Υ represents an attenuation coefficient.

Further, in the charging method, assessing the risk of lithium plating of the battery further includes:
after charging the battery according to the slow-charging-cycle mode, determining that the battery has no risk of lithium plating, so that the battery is charged according to the fast-charging-cycle mode when next charging is required.

Further, charging the battery according to the slow-charging-cycle mode includes:
obtaining a state of charge value, an attenuation coefficient and a rated capacity of the battery;
determining a slow charging current according to the state of charge value, the attenuation coefficient and the rated capacity;
charging the battery with the slow charging current.

Further, determining the slow charging current according to the state of charge value, the attenuation coefficient and the rated capacity includes:
determining an actual charged interval to which the state of charge value belongs;
determining an actual slow charging coefficient corresponding to the actual charged interval according to a preset correspondence relationship between charged intervals and slow charging coefficients; where in the preset correspondence relationship, an upper limit of each charged interval is negatively correlated with each slow charging coefficient;
determining the slow charging current according to a product of the actual slow charging coefficient, the attenuation coefficient and the rated capacity.

Further, if the battery has the risk of lithium plating, switching to the slow-charging-cycle mode for charging the battery, including:
if the battery has the risk of lithium plating, updating a slow-charging-cycle count to make M=M+a, and consecutively charging the battery according to the slow-charging-cycle mode for M times; where, a is an increment value for the slow-charging-cycle count after two adjacent assessments of the risk of lithium plating of the battery.

Further, in the charging method, the fast-charging-cycle mode further includes:
prior to re-executing the step of pre-charging the battery at the first current value for the first duration T1, reducing the second current value.

Further, reducing the second current value includes: reducing the second current value by an amplitude of 2% to 5%.

Further, in the charging method, prior to pre-charging the battery at the first current value, the method further includes:
determining the first duration according to a state of charge value of the battery; determining the first duration includes: determining that the first duration is greater than 0 when the state of charge value is less than a state of charge threshold; determining that the first duration is 0 when the state of charge value is greater than the state of charge threshold.

Further, prior to charging the battery according to the fast-charging-cycle mode, the method further includes: obtaining a target fast charging duration including: obtaining a target fast charging duration; determining the first current value and the second duration according to the target fast charging duration; where both the first current value and the second duration are negatively correlated with the target fast charging duration.

The present application also provides an electronic device, including a processor, a communication interface, a memory, and a communication bus; the processor, the communication interface, and the memory communicate with each other through the communication bus; the memory is configured to store a computer program; when the computer program is executed by the processor, the electronic device executes the method according to any one of the above.

The present application also provides an electric device, including a battery and a battery management system, where the battery management system is configured to charge the battery according to the method of any one of the above.

In the present application, the provided battery charging method, when charging the battery according to the fast-charging-cycle mode, alternately performs: pre-charging the battery at 0.1C to 0.5C for 0-5 seconds, formally charging the battery at a second current value of 1C to 5C for less than or equal to 120 seconds, and pre-discharging the battery at a third current value of 0.01C to 0.1C for 3 to 10 seconds until the battery voltage reaches a preset charging cut-off voltage. By performing alternate charge and discharge cycles with high and low currents during the fast-charging-cycle process, polarization caused by high-current fast charging can be eliminated with a slight increase in charging duration, interface lithium plating can be improved, abnormal voltage plunging phenomena in battery cell can be prevented, and regional SOC differences at the interface caused by fast charging can be balanced. Furthermore, low-current charging can reduce temperature rise differences within the battery cell, reduce regional over-charging and over-discharging phenomena, improve lithium plating, and also enhance the usable life of the battery, thereby solving the problem that existing charging methods cannot improve lithium plating on the negative electrode of lithium batteries while ensuring fast charging performance.

The above description is merely an overview of the technical solution of the present application. To enable a clearer understanding of the technical means of the present application, implementation can be carried out in accordance with the content of the description. Moreover, to make the above and other objectives, features, and advantages of the present application more apparent and easier to understand, specific embodiments of the present application are set forth below.

### BRIEF DESCRIPTION OF DRAWINGS

In order to more clearly illustrate the technical solutions in the embodiments of the present application or the related art, the drawings required in the description of the embodiments or the related art will be briefly introduced below. Obviously, the drawings in the following description are some embodiments of the present application. For persons skilled in the art, other drawings can also be obtained from these drawings without creative effort.
FIG. 1 is a flowchart of a battery charging method provided by an embodiment of the present application.
FIG. 2 is a block diagram of an electronic device provided by an embodiment of the present application.

### DESCRIPTION OF EMBODIMENTS

In order to make the objectives, technical solutions, and advantages of the embodiments of the present application clearer, the technical solutions in the embodiments of the present application will be described clearly and completely below in conjunction with the accompanying drawings in the embodiments of the present application. Obviously, the described embodiments are part of the embodiments of the present application, but not all of them. According to the embodiments in the present application, all other embodiments obtained by persons skilled in the art without making creative efforts shall fall within the protection scope of the present application.

In order to make the above objectives, features, and advantages of the present application more apparent and easier to understand, the present application is described in further detail below with reference to the accompanying drawings and specific embodiment.

The applicant of the present application has found that existing fast charging methods, such as pulse charging, variable current charging, and variable voltage charging, can significantly increase the battery charging rate and achieve fast charging effects. However, although these charging methods can improve fast charging time, there is significant polarization, which easily leads to interfacial lithium plating, thereby affecting the battery's cycle life.

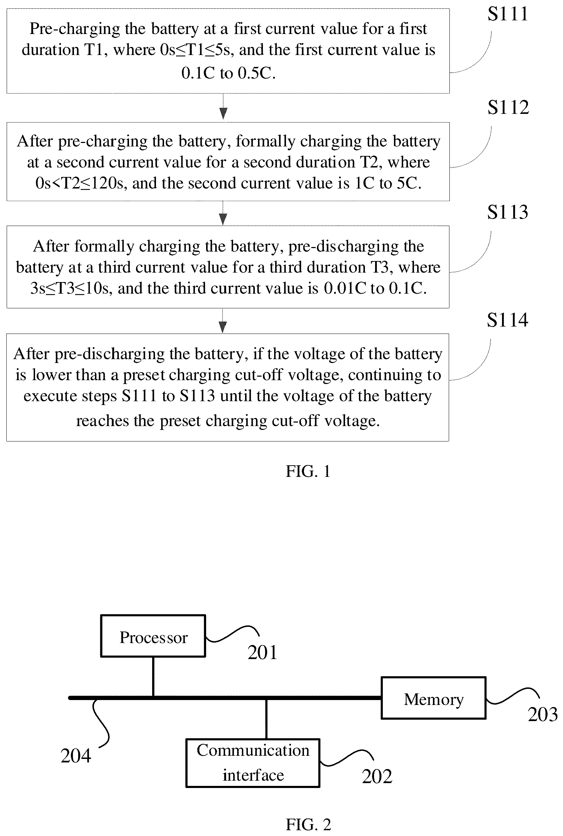

To solve the above problems, an embodiment of the present application provides a battery charging method, which charges the battery in a fast-charging-cycle mode. As shown in FIG. 1, the above fast-charging-cycle mode includes steps S111 to S114:
Step S111: pre-charging the battery at a first current value for a first duration T1, where 0s≤T1≤5s, and the first current value is 0.1C to 0.5C.

In the above step S111, when starting to execute the fast-charging-cycle mode, the battery is first charged at a current value of 0.1C to 0.5C for a duration of 0 to 5 seconds, completing one pre-charging process. This low-current charging at 0.1C to 0.5C for 0 to 5s can reduce temperature rise differences of the battery cell, mitigate localized overcharging and over-discharging phenomena, and only slightly increase the total charging time, which improves lithium plating while also enhancing the usable life of the battery. Where, C represents a rated capacity.

Optionally, in some embodiments, T1 may be 1s, 2s, 3s, 4s, 5s, or a range between any two of these values.

Optionally, in some embodiments, the first current value may be 0.1C, 0.2C, 0.3C, 0.4C, 0.5C, or a range between any two of these values.

Step S112: after pre-charging the battery, formally charging the battery at a second current value for a second duration T2, where 0s<T2≤120s, and the second current value is 1C to 5C.

In the above step S112, after completing the pre-charging, the battery is formally charged at a current value of 1C to 5C for a duration less than or equal to 120s, completing one formal charging process.

The second duration is greater than the first duration. Optionally, in some embodiments, T2 may be 10s, 20s, 30s, 40s, 50s, 60s, 70s, 80s, 90s, 100s, 110s, 120s, or a range between any two of these values.

Optionally, in some embodiments, the second current value may be 1C, 2C, 3C, 4C, 5C, or a range between any two of these values.

Step S113: after formally charging the battery, pre-discharging the battery at a third current value for a third duration T3, where 3s≤T3≤10s, and the third current value is 0.01C to 0.1C.

In the above step S113, after completing one formal charging cycle, the battery is pre-discharged at a current value of 0.01C to 0.1C for a duration of 3 to 10 seconds, completing one pre-discharge process, thereby eliminating polarization caused by high-current fast charging and improving interfacial lithium plating phenomena.

Optionally, in some embodiments, T3 may be 3s, 4s, 5s, 6s, 7s, 8s, 9s, 10s, or a range between any two of these values.

Optionally, in some embodiments, the third current value may be 0.01C, 0.02C, 0.03C, 0.04C, 0.05C, 0.06C, 0.07C, 0.08C, 0.09C, 0.1C, or a range between any two of these values.

Step S114: after pre-discharging the battery, if the voltage of the battery is lower than a preset charging cut-off voltage, continuing to execute steps S111 to S113 until the voltage of the battery reaches the preset charging cut-off voltage.

In the above step S114, if the voltage of the battery is lower than the preset charging cut-off voltage, it indicates that the battery is not yet fully charged and needs to be further charged. Therefore, the step of pre-charging the battery at the first current value for the first duration T1 is executed, that is, steps S111 to S113 continue to be executed until the voltage of the battery reaches the preset charging cut-off voltage, indicating that the battery is fully charged, and then charging is stopped.

In the above charging method provided by the embodiments of the present application, by performing alternate charge and discharge cycles with high and low currents during the fast-charging-cycle process, polarization caused by high-current fast charging can be eliminated with only a slight increase in charging duration, interfacial lithium plating can be improved, abnormal cell voltage plunging phenomena can be prevented, and regional SOC differences at the interface caused by fast charging can be balanced. Furthermore, low-current charging can reduce temperature rise differences within the battery cell, reduce regional overcharging and over-discharging phenomena, improve lithium plating, and also enhance the usable life of the battery. Thus, the problem that existing charging methods cannot improve lithium plating on the negative electrode of lithium batteries while ensuring fast charging performance is solved.

Additionally, the above charging method provided by the embodiments of the present application controls the battery to be charged with optimized time at charging current value while ensuring the cycle performance of the battery cell. It is simple to operate and has low optimization cost.

Optionally, in an embodiment, the charging method provided by the embodiments of the present application further includes steps S101 to S102 prior to charging the battery according to the fast-charging-cycle mode.

Step S101: obtaining a target fast charging duration.

In this step, the target fast charging duration refers to the charging duration selected by the user on an external charging device to fully charge the battery. When a charging gun is inserted into the vehicle's charging port, the vehicle's battery management system establishes communication with the external charging device, thereby obtaining the above target charging duration.

Step S102: determining the first current value and the second duration according to the target fast charging duration; where, both the first current value and the second duration are negatively correlated with the target fast charging duration.

In this step, the longer the target fast charging duration is, the less electricity is required to be charged into the battery per unit time; and the shorter the target fast charging duration is, the more electricity is required to be charged into the battery per unit time, therefore, the first current value and the second duration are each set to be negatively correlated with the above target fast charging duration. That is, when the target fast charging duration is shorter, a larger current value is used to pre-charge the battery; and when the target fast charging duration is longer, a smaller current value is used to pre-charge the battery, which can improve the lithium plating issue as much as possible on the premise of meeting the user's fast charging requirements.

Exemplarily, when the target fast charging durations are 10min, 20min, 30min, and 40min, the first current value Ia can be set to 0.5C, 0.4C, 0.3C, and 0.2C, respectively.

Optionally, in an embodiment, the fast-charging-cycle mode provided in the embodiments of the present application further includes step S115:
prior to re-executing the step of pre-charging the battery at the first current value for the first duration T1, reducing the second current value.

In this embodiment, after each fast-charging-cycle is executed, the second current value for the formal charging is reduced once, thereby matching the gradually increasing state of charge value and more effectively alleviating the occurrence of lithium plating risk.

Optionally, in a specific embodiment, reducing the second current value specifically includes: reducing the second current value by an amplitude of 2% to 5%.

In this specific embodiment, after each fast-charging-cycle is executed, the second current value for the formal charging is reduced by an amplitude of 2% to 5%.

Optionally, the reduction amplitude of the second current value may be determined according to the target fast charging duration; where, the reduction amplitude is negatively correlated with the target fast charging duration. That is, when the target fast charging duration is shorter, the second current value is reduced by a larger amplitude; whereas when the target fast charging duration is longer, the second current value is reduced by a smaller amplitude. This allows for improving the lithium plating issue as much as possible on the premise of meeting the user's fast charging requirements.

Exemplarily, when the target fast charging durations are 10min, 20 min, 30 min, and 40min, the reduction amplitude of the second current value can be set to 5%, 4%, 3%, and 2%, respectively.

Optionally, in an embodiment, the fast-charging-cycle mode provided in the embodiment of the present application, prior to pre-charging the battery at the first current value, further includes step S103:
determining the first duration according to a state of charge value of the battery.

In this step, because the charging rate performance of the battery differs under different state of charge values, in order to balance the charging rate performance across various state of charge values, a pre-charge duration matching the actual charging performance of the battery can be set when each fast-charging-cycle is executed, that is, the above first duration is determined.

In practical applications, the higher the state of charge value of the battery, the smaller the current that it can withstand without lithium plating. That is, the worse its rate performance, the smaller the above second current value, and the smaller the difference between the first current value and the second current value. Consequently, the lithium plating improvement effect brought by low-current charging is less obvious. Therefore, the above first duration can be set to be negatively correlated with the state of charge value of the battery, that is, the higher the state of charge value of the battery, the shorter the above first duration length.

Optionally, in a specific embodiment, the above step S103 includes: determining that the first duration is greater than 0 when the state of charge value is less than a state of charge threshold; determining that the first duration is 0 when the state of charge value is greater than the state of charge threshold.

In the above specific embodiment, the state of charge threshold refers to a state of charge value at which the battery is prone to lithium plating risk, and requires current-limited charging. This state of charge threshold needs to be calibrated according to the actual performance of the battery, and can be, for example, 80%, 85%, or 90%.

In the above specific embodiment, when the state of charge value of the battery is less than the above state of charge threshold, the second current value for the formal charging is relatively large; and in order to better alleviate the polarization phenomenon, the battery needs to be pre-charged first, that is, the above first duration is set to be greater than 0. When the state of charge value of the battery is greater than or equal to the above state of charge threshold, the second current value for the formal charging is relatively small, the polarization phenomenon caused by the formal charging is weak, and there is no need to pre-charge the battery further, that is, setting the above first duration to 0 can improve charging efficiency.

Exemplarily, when the state of charge value of the battery is less than or equal to 80%, it is set that 0s<T2≤90s and 1s≤T1≤5s; and when the state of charge value of the battery is greater than 80%, it is set that 90s<T2≤120s and T1=0s.

Optionally, in an embodiment, the charging method provided by the embodiment of the present application, prior to pre-charging the battery at the first current value, further includes steps S104 to S106:
Step S104: when a fast charging count n of the battery that is charged according to the fast-charging-cycle mode is greater than a fast charging count threshold N, assessing a risk of lithium plating of the battery.

In this step, the fast charging count threshold N is preset, and the fast charging count threshold refers to the fast charging count that triggers the assessment of the battery's risk of lithium plating. The fast charging count threshold N can be calibrated according to the actual performance of the battery, for example, it can be set to 10. That is, when the charging count of the battery that is charged using the fast-charging-cycle mode in the charging method provided in the embodiment of the present application reaches 10, the assessment of the battery's lithium plating risk is triggered. If the charging count of the battery that is charged using the fast-charging-cycle mode in the charging method provided in the embodiment of the present application has not reached 10, the step of assessing the battery's lithium plating risk is not executed.

Step S105: if the battery has no risk of lithium plating, continuing to execute the step of charging the battery according to the fast-charging-cycle mode.

In this step, if it is determined that the battery currently does not have a risk of lithium plating, it indicates the battery is in good condition and can continue to be fast charged. Therefore, the step of charging the battery according to the fast-charging-cycle mode continues to be executed to meet the user's fast charging requirements.

Step S106: if the battery has the risk of lithium plating, switching to a slow-charging-cycle mode for charging the battery.

In this step, if it is determined that the battery currently has a risk of lithium plating, it indicates the battery is in poor condition and cannot continue fast charging. Therefore, the charging process switches to the step of charging the battery according to the slow-charging-cycle mode, in order to address the battery's lithium plating issue.

In the above embodiment, by setting that the assessment of the battery's risk of lithium plating is triggered only after the charging count of the battery that is charged in the fast-charging-cycle mode reaches the fast charging count threshold N, and if the battery does not have lithium plating risk, it will continue to be charged in the fast-charging-cycle mode; otherwise, the battery will be charged in the slow-charging-cycle mode, which can timely alleviate the battery's polarization and improve its lithium plating issue.

Optionally, in an embodiment, the above step S104 specifically includes:
when n-N is an integer multiple of m, assessing the risk of lithium plating of the battery according to a historical discharge capacity of the battery; where m is a fast charging count between two adjacent assessments of the risk of lithium plating of the battery, and n > m.

In this embodiment, the historical discharge capacity refers to the capacity value output by the battery after it is fully charged prior to the start of the current charging. Where, since the historical discharge capacity reflects the capacity retention and change trend of the battery, the lithium plating risk of the battery can be judged according to the historical discharge capacity.

In this embodiment, after the charging count of the battery that is charged in the fast-charging cycle mode reaches N, as long as the charging count of the battery that is charged in the fast-charging-cycle mode reaches m, the assessment of whether the battery has a lithium plating risk is triggered, which enables timely elimination of the risk when the lithium plating risk is identified in the battery.

Optionally, in a specific embodiment, the above m may be 10, which can minimize the number of assessments while ensuring timely assessment of the lithium plating risk, thereby reducing computational load.

Optionally, in a specific embodiment, the above step S104 includes steps S1041 to S1045.

S1041: determining a discharge capacity Cₙ₋ₘ after the (n-m)th fast-charging-cycle and a discharge capacity Cₙ after the nth fast-charging-cycle according to the historical discharge capacity of the battery.

In this step, because the above historical discharge capacity records the capacity value output by the battery after each full charge, prior to executing the current charging, the discharge capacity Cₙ after the last (i.e., the previous) full charge performed in the fast charging mode and the discharge capacity Cₙ₋ₘ after the mth-to-last full charge performed in the fast charging mode can be obtained according to this historical discharge capacity.

S1042: Calculating a current capacity cycle change rate K1 of the battery according to (Cₙ₋ₘ-Cₙ)/m.

In this step, the difference in discharge capacity of battery between two fast-charging-cycles separated by m fast-charging-cycles is divided by the m to serve as the current capacity cycle change rate of the battery.

S1043: defining this capacity cycle change rate as a baseline capacity cycle change rate K2 when the current capacity cycle change rate K1 of the battery is greater than 0 for the first time, according to the historical discharge capacity of the battery.

S1044: assessing the risk of lithium plating of the battery according to the current capacity cycle change rate K1 and the baseline capacity cycle change rate K2.

In this step, since the above baseline capacity cycle change rate reflects the capacity change of the battery when it is charged according to the fast-charging-cycle mode in its initial state, and the current capacity cycle change rate reflects the capacity change of the battery when it is charged according to the fast-charging-cycle mode in its current state, by comparing the baseline capacity cycle change rate with the current capacity cycle change rate, it can be assessed whether the current capacity cycle change rate of the battery is abnormal, that is, it can also be assessed whether there is a risk of lithium plating.

Optionally, in a specific embodiment, the above step S1045 specifically includes:
determining that the battery has the risk of lithium plating when K1>x*K2, where x=1.01 to 1.05.

In this specific embodiment, x is a determination coefficient, whose value is between 1.01 and 1.05 depending on the battery system and materials. Where, when K1>x*K2, it indicates an intensified capacity change rate, and the battery is likely to have a severe risk of lithium plating, thus it is determined that the battery has a lithium plating risk; whereas when K1 ≤ x*K2, it indicates that the change in the capacity change rate is not significant, and the battery's lithium plating risk is not apparent, thus it can be determined that the battery has no risk of lithium plating.

Optionally, in an embodiment, the above step S104 further includes step S1046:
After charging the battery according to the slow-charging-cycle mode, determining that the battery has no risk of lithium plating, so that the battery is charged according to the fast-charging-cycle mode when next charging is required.

In this embodiment, since charging the battery according to the slow-charging-cycle mode can effectively alleviate the polarization phenomenon of the battery and improve its risk of lithium plating, theoretically, after the battery is charged according to the slow-charging-cycle mode, it can continue to withstand the polarization effects caused by charging in the fast-charging-cycle mode. Therefore, the battery is assessed to have no lithium plating risk, so that the battery is charged according to the fast-charging-cycle mode when it needs to be charged next time.

Optionally, in an embodiment, charging the battery according to the slow-charging-cycle mode includes steps S1061 to S1063:
S1061: obtaining a state of charge value, an attenuation coefficient and a rated capacity of the battery.

In this step, the state of charge value refers to the state of charge value of the battery prior to the slow-charging-cycle mode, which can be directly acquired by the battery management system; the attenuation coefficient and the rated capacity are inherent performance parameters of the battery, which are related to its structure and materials.

S1062: determining a slow charging current according to the state of charge value, the attenuation coefficient and the rated capacity.

In this step, because the charging current capable of alleviating battery polarization and improving the lithium plating risk is related to the state of charge value, the attenuation coefficient, and the rated capacity of the battery, a matched slow charging current can be determined according to the actual state of charge value, attenuation coefficient, and rated capacity of the battery.

S1063: charging the battery at the slow charging current.

In this step, the battery is charged at the slow charging current determined in the above step S1062.

In the above embodiment, when it is determined that the battery has a lithium plating risk, a matched slow charging current is determined according to the state of charge value, attenuation coefficient, and rated capacity of the battery, and the battery is charged at the slow charging current until its voltage reaches the preset charging cut-off voltage, which can better alleviate polarization and improve the lithium plating issue.

Optionally, in a specific embodiment, the above step S1062 includes steps S10621 to S10623:
Step S10621: determining an actual charged interval to which the state of charge value belongs.

In this step, the state of charge values of the battery are divided into multiple non-overlapping charged intervals in advance. After the actual state of charge value of the battery is determined, the charged interval to which the above state of charge value belongs, i.e., the above actual charged interval, can be judged according to the relationship between the state of charge value and the upper and lower limits of each charged interval.

Step S10622: determining an actual slow charging coefficient corresponding to the actual charged interval according to a preset correspondence relationship between charged intervals and slow charging coefficients; among them, in the preset correspondence relationship, an upper limit of each charged interval is negatively correlated with each slow charging coefficient.

In this step, a matched slow charging coefficient is preset for each charged interval according to the specific performance of the battery. The slow charging coefficient is greater than 0 and less than or equal to 1. Where, because the battery can withstand a smaller lithium-plating-free current when the battery's electricity is higher, the charging current needs to be gradually reduced as the electricity approaches saturation. That is, the upper limit of each charged interval is set to be negatively correlated with the slow charging coefficient.

Step S10623: determining the slow charging current according to a product of the actual slow charging coefficient, the attenuation coefficient and the rated capacity.

In this step, the actual slow charging coefficient is multiplied by the attenuation coefficient and the rated capacity to calculate the matched slow charging current value.

Exemplarily, the above step S1062 specifically includes: when the state of charge value is within a range of 5% to 50%, determining the slow charging current to be YC; when the state of charge value is within a range of 50% to 85%, determining the slow charging current to be 0.5ΥC; when the state of charge value is within a range of 85% to 97%, determining the slow charging current to be 0.2ΥC. Where, Υ =Cₙ/C1, C represents the rated capacity, Y represents the attenuation coefficient, and Cₙ represents the discharge capacity of the battery after the last full charge that is performed according to the fast charging mode. That is, if executing the slow-charging-cycle mode to charge the battery is triggered, then when the battery's state of charge value is within the range of 5% to 50%, it is charged with a current of ΥC; when the battery's state of charge value is within the range of 50% to 85%, it is charged with a current of 0.5ΥC; and when the battery's state of charge value is within the range of 85% to 97%, it is charged with a current of 0.2YC.

In the above embodiment, when it is determined that the battery has a lithium plating risk, a matched actual slow charging coefficient is determined according to the battery's state of charge value. Then, a matched slow charging current is determined according to this actual slow charging coefficient, the attenuation coefficient and the rated capacity, and the battery is charged according to this slow charging current until its voltage reaches the preset charging cut-off voltage, which can better alleviate polarization and improve the lithium plating issue.

Optionally, in a specific embodiment, the above step S106 specifically includes: if the battery has the risk of lithium plating, updating a slow-charging-cycle count to make M=M+a, and consecutively charging the battery according to the slow-charging-cycle mode for M times; where, a is an increment value for the slow-charging-cycle count after two adjacent assessments of the risk of lithium plating of the battery.

In this specific embodiment, the initial value of M is 0; as the risk of lithium plating continues to appear, it indicates that the health of the lithium battery continues to deteriorate. Setting the number of slow-charging-cycle mode executed after determining that the battery has a risk of lithium plating to increase gradually by a step size of a, can effectively deal with the gradually worsening risk of lithium plating caused by fast charging. Where, the above a may be 1, 2, or 3, etc.

Optionally, the value of M is set to be less than or equal to 10. Due to the relatively lower demand for slow charging in practical applications, the number of slow-charging-cycle each time is controlled within 10 cycles. That is, every 10 fast-charging-cycles are alternately executed with 1 slow-charging-cycle, and this alternation continues gradually until every 10 fast-charging-cycles are alternately executed with 10 slow-charging-cycles.

Optionally, in an embodiment, the charging method provided by the embodiments of the present application further includes step S107 prior to charging the battery according to the fast-charging-cycle mode:
updating an initial value of the second current value according to the current capacity cycle change rate K1 and the baseline capacity cycle change rate K2.

In this step, prior to starting to charge the battery according to the fast-charging-cycle mode, an initial formal charging current matching the current lithium plating condition of the battery, that is, the initial value of the above second current value, is first determined according to the current capacity cycle change rate and the baseline capacity cycle change rate of the battery.

Optionally, in a specific embodiment, the updating in the above step S107 is performed in one of the following patterns:
pattern 1: when K1≤K2, updating the second current value to make Ibₙ= Ibₙ₋ₘ;
pattern 2: when K2≤K1≤xK2, updating the second current value to make Ibₙ=(1-K1)*Ib;
pattern 3: when K1≥xK2, updating the second current value to make Ibₙ=(1-K1)*Ib *Y;
where, Ib=α*C, K1 represents the current capacity cycle change rate, K2 represents the baseline capacity cycle change rate, C represents a rated capacity, α represents a lithium-plating-free coefficient, n represents a cycle number of fast-charging-cycle, and Υ represents an attenuation coefficient, and x=1.01 to 1.05.

In the above specific embodiment, Ib≤Imax, where Imax is a maximal lithium-plating-free current of the battery cell within a specific charging interval, and Imax/C yields the lithium-plating-free coefficient α.

The embodiments of the present application also provide an electric device, including a battery and a battery management system, where the battery management system is configured to charge the battery according to the method described above.

Regarding the embodiment of the above electric device, as it is substantially similar to the embodiment of the battery charging method, the relevant details can be referred to the description of the method embodiment part.

The present application is described in detail below through examples.

### Example 1

### (1) Preparation of positive electrode sheet

Li(Ni0.8Mn0.1Co0.1)O2 (NMC811) as a positive active material, acetylene black (Super P) as a conductive agent, and polyvinylidene fluoride (PVDF) as a binder were uniformly mixed at a mass ratio of 94:3:3, and uniformly dispersed in 1-methyl-2-pyrrolidinone (NMP) to form a uniform black slurry. The mixed slurry was coated onto both sides of an aluminum foil, followed by drying, rolling, and cutting to obtain the positive electrode sheet.

### (2) Preparation of negative electrode sheet

Artificial graphite (AG) and silicon oxide (SiO) as negative electrode active materials, acetylene black (Super P) as a conductive agent, and SBR as a binder were uniformly mixed at a mass ratio of 84.6:9.4:3:3, and uniformly dispersed in deionized water to form a uniform black slurry. The mixed slurry was coated onto both sides of a copper foil, followed by drying, rolling, and cutting to obtain a negative electrode sheet with an areal density of 7 mg/cm2.

### (3) Preparation of electrolyte

Ethylene carbonate (EC), ethyl methyl carbonate (EMC), and diethyl carbonate (DEC) were uniformly mixed at a mass ratio of 30:30:40 to obtain a mixed solvent. Then, the lithium salt LiPF6, or the lithium salt LiPF6 and additives, were dissolved in the resulting mixed solvent and mixed uniformly to obtain the electrolyte, where the concentration of LiPF6 in the electrolyte was 1mol/L, and the mass percentage of LiODFB was 0.3%.

### (4) Production of secondary battery

The prepared positive electrode sheet, separator, and negative electrode sheet were stacked in sequence with the separator placed between the positive and negative electrode sheets. After winding, hot pressing, and tab welding, a bare cell was obtained. The bare cell was placed in an aluminum laminate film package and baked in an oven at 85±10°C for 24h. The electrolyte prepared above was injected into the dried cell, followed by standing, formation, and capacity grading, thereby completing the preparation of the lithium-ion pouch battery.

At 25°C, the battery was charged according to the following steps, including:
(1) charging at a constant current Ia=0.3C for a charging time of 1s;
(2) charging at a constant current Ib=1C for a charging time of 10s;
(3) discharging at a constant current of 0.01C for a discharging time of 3s;
(4) repeating steps (1) to (3) until the battery voltage reached an upper limit of the cutoff working voltage to end the cycle.

The other Examples and Comparative examples refer to Example 1, with differences shown in Table 1.

The secondary batteries prepared in the Examples and Comparative examples were tested using a Neware battery test system to obtain the lowest point potential for negative electrode lithium plating of the same battery under different test conditions, which was recorded in Table 1.

The secondary batteries prepared in the Examples and Comparative examples were tested using the Neware battery test system to obtain the cycle retention rate of the same battery after 500 cycles, which was recorded in Table 1.

**Table 1**

| | First Current Value | First Duration | Second Current Value | Second Duration | Third Current Value | Third Duration | Initial negative-electrode lithium plating potential/mV | Cycle Retention Rate |
|---|---|---|---|---|---|---|---|---|
| Example 1 | 0.3C | 1S | 1C | 10S | 0.01C | 3S | 53 | 93.9% |
| Example 2 | 0.3C | 3S | 1C | 10S | 0.01C | 3S | 50 | 92.1% |
| Example 3 | 0.3C | 5S | 1C | 10S | 0.01C | 3S | 49 | 91.6% |
| Example 4 | 0.3C | 3S | 2C | 10S | 0.01C | 3S | 30 | 87.6% |
| Example 5 | 0.3C | 3S | 3C | 10S | 0.01C | 3S | 19 | 84.7% |
| Example 6 | 0.3C | 3S | 4C | 10S | 0.01C | 3S | 11 | 81.4% |
| Example 7 | 0.3C | 3S | 5C | 10S | 0.01C | 3S | 3 | 79.1% |
| Example 8 | 0.3C | 3S | 1C | 30S | 0.01C | 3S | 44 | 92.5% |
| Example 9 | 0.3C | 3S | 1C | 50S | 0.01C | 3S | 31 | 86.6% |
| Example 10 | 0.3C | 3S | 1C | 70S | 0.01C | 3S | 25 | 87.6% |
| Example 11 | 0.3C | 3S | 1C | 100S | 0.01C | 3S | 18 | 82.8% |
| Example 12 | 0.3C | 3S | 1C | 50S | 0.03C | 3S | 31 | 84.6% |
| Example 13 | 0.3C | 3S | 1C | 50S | 0.05C | 3S | 33 | 85.9% |
| Example 14 | 0.3C | 3S | 1C | 50S | 0.07C | 3S | 34 | 86.6% |
| Example 15 | 0.3C | 3S | 1C | 50S | 0.1C | 3S | 37 | 87.3% |
| Example 16 | 0.3C | 3S | 1C | 50S | 0.07C | 4S | 35 | 86.3% |
| Example 17 | 0.3C | 3S | 1C | 50S | 0.07C | 6S | 37 | 88.5% |
| Example 18 | 0.3C | 3S | 1C | 50S | 0.07C | 8S | 38 | 89.0% |
| Example 19 | 0.3C | 3S | 1C | 50S | 0.07C | 10S | 40 | 90.6% |
| Example 20 | 0.1C | 3S | 1C | 50S | 0.07C | 6S | 37 | 88.0% |
| Example 21 | 0.2C | 3S | 1C | 50S | 0.07C | 6S | 35 | 88.4% |
| Example 22 | 0.4C | 3S | 1C | 50S | 0.07C | 6S | 38 | 88.4% |
| Example 23 | 0.5C | 3S | 1C | 50S | 0.07C | 6S | 40 | 89.2% |
| Example 24 | 0.3C | 3S | 1.9C | 50S | 0.07C | 6S | 25 | 86.6% |
| Example 25 | 0.3C | 3S | 2.9C | 50S | 0.07C | 6S | 21 | 84.9% |
| Example 26 | 0.3C | 3S | 3.88C | 50S | 0.07C | 6S | 18 | 80.2% |
| Example 27 | 0.3C | 3S | 4.8C | 50S | 0.07C | 6S | 0 | 78.7% |
| Comparative Example 1 | 0.05C | 6S | 0.2 | 150S | 0.007C | 1S | 128 | 97.8% |
| Comparative Example 2 | 1.0C | 8S | 7C | 180S | 0.3C | 15S | -69 | 61.1% |
| Comparative Example 3 | 0C | 0S | 4C | 10S | 0 | 0 | -17 | 68.3% |
| Comparative Example 4 | 0.4C | 3S | 6C | 50S | 0C | 0S | -42 | 65.8% |

As can be seen from the test results in Table 1, Comparative example 1 has the best cycle retention rate after 500 cycles and the optimal negative-electrode lithium plating potential, but its overall cycle is long, which is unfavorable for application. Comparative examples 2, 3, and 4 have lower negative-electrode lithium plating potentials and poor cycle retention rates after 500 cycles, indicating their poor performance in cycle fast-charging processes. The cycle retention rates of several other Examples are all higher than those of the Comparative examples, indicating that the fast charging method involving alternate charge and discharge at high and low currents significantly improves cycle performance and has high cycle retention rate.

An embodiment of the present application further provides an electronic device. As shown in FIG. 2, it includes a processor 201, a communication interface 202, a memory 203, and a communication bus 204. Where, the processor 201, the communication interface 202 and the memory 203 communicate with each other through the communication bus 204.

The memory 203 is configured to store a computer program.

The processor 201 is configured to, when executing the program stored in the memory 203, implement the following steps:
charging a battery according to a fast-charging-cycle mode.

The fast-charging-cycle mode includes:
pre-charging the battery at a first current value for a first duration T1, where 0s≤T1≤5s, and the first current value is 0.1C to 0.5C;
after pre-charging the battery, formally charging the battery at a second current value for a second duration T2, where 0s<T2≤120s, and the second current value is 1C to 5C;
after formally charging the battery, pre-discharging the battery at a third current value for a third duration T3, where 3s≤T3≤10s, and the third current value is 0.01C to 0.1C;
after pre-discharging the battery, if the voltage of the battery is lower than a preset charging cut-off voltage, continuing to execute the step of pre-charging the battery at the first current value for the first duration T1.

Where, the processor 201 may also implement other steps in the above battery charging method, which are not repeated here.

The communication bus mentioned in the above electronic device may be a Peripheral Component Interconnect (PCI) bus or an Extended Industry Standard Architecture (EISA) bus, etc. The communication bus can be divided into an address bus, a data bus, a control bus, etc. For ease of representation, only one thick line is used in the figure, but this does not mean that there is only one bus or one type of bus.

The communication interface is configured for communication between the above electronic device and other devices.

The memory may include a Random Access Memory (RAM), and may also include a non-volatile memory, such as at least one disk memory. Optionally, the memory may also be at least one storage device located remotely from the above processor.

The above processor may be a general-purpose processor, including a Central Processing Unit (CPU), a Network Processor (NP), and the like; it may also be a Digital Signal Processor (DSP), an Application Specific Integrated Circuit (ASIC), a Field-Programmable Gate Array (FPGA), or other programmable logic device, discrete gate or transistor logic device, or discrete hardware component.

In another embodiment provided by the present application, a computer-readable storage medium is provided. The computer-readable storage medium stores an instruction. When the instruction is run on a computer, the computer executes the battery charging method described in the above embodiments.

In yet another embodiment provided by the present application, a computer program product containing an instruction is also provided. The computer program product, when run on a computer, causes the computer to execute the battery charging method described in the above embodiments.

In yet another embodiment provided by the present application, an electric device is provided. The electric device includes a battery and a battery management system. The battery management system includes the electronic device as described in the above embodiment.

The above embodiments may be implemented entirely or partially by software, hardware, firmware, or any combination thereof. When implemented using software, it may be implemented entirely or partially in the form of a computer program product. The computer program product includes one or more computer instructions. When the computer program instruction is loaded and executed on a computer, the processes or functions described in the embodiments of the present application are generated, in whole or in part. The computer may be a general-purpose computer, a special-purpose computer, a computer network, or other programmable apparatus. The computer instruction may be stored in a computer-readable storage medium or transmitted from one computer-readable storage medium to another computer-readable storage medium. For example, the computer instruction may be transmitted from a website, computer, server, or data center to another website, computer, server, or data center via wired means (e.g., coaxial cable, optical fiber, Digital Subscriber Line (DSL)) or wireless means (e.g., infrared, wireless, microwave, etc.). The computer-readable storage medium may be any available medium that can be accessed by a computer or a data storage device such as a server or a data center that integrates one or more available media. The available medium may be a magnetic medium (e.g., floppy disk, hard disk, magnetic tape), an optical medium (e.g., DVD), or a semiconductor medium (e.g., Solid State Disk (SSD)), etc.

It should be noted that, in this application, relational terms such as first and second, etc. are merely used to distinguish one entity or operation from another entity or operation, and do not necessarily require or imply any actual relationship or order between these entities or operations. Furthermore, the term "include", "comprise", or any variant thereof is intended to encompass non-exclusive inclusion, such that a process, method, article, or device that includes a series of elements includes not only those elements, but also other elements not explicitly listed, or elements inherent to such process, method, article, or device. Without further limitation, an element defined by the phrase "include a/an..." does not preclude the existence of additional identical elements in the process, method, article, or device that includes the stated element.

Each embodiment in this specification is described in a related manner. The same or similar parts between various embodiments can be referred to each other. Each embodiment focuses on the differences from other embodiments. As for the embodiments of the electric device, electronic device, computer-readable storage medium and computer program product containing an instruction, since they are basically similar to the method embodiments, the description is relatively simple, and the relevant parts can be referred to the description of the method embodiments.

The above description is merely a preferred embodiment of the present application and is not intended to limit the scope of protection of the present application. Any modification, equivalent substitution, improvement, etc. made within the spirit and principles of the present application are included in the scope of protection of the present application.

In summary, in this embodiment, by performing alternate charge and discharge cycles at high and low currents during the fast-charging-cycle process, polarization caused by high-current fast charging can be eliminated with only a slight increase in charging duration, interface lithium plating can be improved, abnormal cell voltage plunging phenomena can be prevented, and regional SOC differences at the interface caused by fast charging can be balanced. Furthermore, low-current charging can reduce temperature rise differences within the battery cell, reduce regional overcharging and over-discharging phenomena, improve lithium plating, and also enhance the usable life of the battery. Thus, the problem that existing charging methods cannot improve lithium plating on the negative electrode of lithium batteries while ensuring fast charging performance is solved.

Although preferred embodiments of the present application have been described, persons skilled in the art may make additional changes and modifications to these embodiments once they understand the basic inventive concepts. Therefore, the claims are intended to be interpreted as including the preferred embodiment and all changes and modifications that fall within the scope of the embodiments of the present application.

The above is a detailed introduction to a battery charging method and an electric device provided by the present application. Specific examples are used herein to explain the principles and implementation modes of the present application. The description of the above embodiments is only intended to help understand the method of the present application and its core ideas. At the same time, for persons of ordinary skill in the art, depending on the ideas of the present application, there will be changes in the specific embodiment and application scope. In summary, the content of the specification shall not be construed as limitations to the present application.

## Claims

1. A charging method of battery, comprising:
charging the battery according to a fast-charging-cycle mode;
wherein the fast-charging-cycle mode comprises the following steps :
at S111: pre-charging the battery at a first current value for a first duration T1, wherein 0s≤T1≤5s, and the first current value is 0.1C to 0.5C;
at S112: after pre-charging the battery, formally charging the battery at a second current value for a second duration T2, wherein 0s<T2≤120s, and the second current value is 1C to 5C;
at S113: after formally charging the battery, pre-discharging the battery at a third current value for a third duration T3, wherein 3s≤T3≤10s, and the third current value is 0.01C to 0.1C;
at S114: after pre-discharging the battery, in case that a voltage of the battery is lower than a preset charging cut-off voltage, continuing to execute steps S111 to S113 until the voltage of the battery reaches the preset charging cut-off voltage.

2. The charging method according to claim 1, wherein prior to pre-charging the battery at the first current value for the first duration T1, the method further comprises the following steps:
in case that a fast charging count n of the battery that is charged according to the fast-charging-cycle mode is greater than a fast charging count threshold N, assessing a risk of lithium plating of the battery:
in case that the battery has no risk of lithium plating, continuing to execute the step of charging the battery according to the fast-charging-cycle mode;
in case that the battery has the risk of lithium plating, switching to a slow-charging-cycle mode for charging the battery.

3. The charging method according to claim 2, wherein the step of assessing the risk of lithium plating of the battery comprises:
in case that n-N is an integer multiple of m, assessing the risk of lithium plating of the battery according to a historical discharge capacity of the battery, wherein m is a fast charging count between two adjacent assessments of the risk of lithium plating of the battery, and n>m.

4. The charging method according to claim 3, wherein the step of assessing the risk of lithium plating of the battery according to the historical discharge capacity of the battery comprises:
determining a discharge capacity Cₙ₋ₘ after the (n-m)th fast-charging-cycle and a discharge capacity Cₙ after the nth fast-charging-cycle according to the historical discharge capacity of the battery;
calculating a current capacity cycle change rate K1 of the battery according to (Cₙ₋ₘ-Cₙ)/m;
defining this capacity cycle change rate as a baseline capacity cycle change rate K2 in case that the current capacity cycle change rate K1 of the battery is greater than 0 for the first time, according to the historical discharge capacity of the battery;
assessing the risk of lithium plating of the battery according to the current capacity cycle change rate K1 and the baseline capacity cycle change rate K2.

5. The charging method according to claim 4, wherein the step of assessing the risk of lithium plating of the battery according to the current capacity cycle change rate K1 and the baseline capacity cycle change rate K2 comprises:
determining that the battery has the risk of lithium plating in case that K1>x*K2, wherein x=1.01 to 1.05.

6. The charging method according to claim 5, wherein prior to charging the battery according to the fast-charging-cycle mode, the charging method further comprises the step of:
updating an initial value of the second current value according to the current capacity cycle change rate K1 and the baseline capacity cycle change rate K2, the updating being performed in one of the following patterns:
pattern 1: in case that K1≤K2, updating the second current value to make Ibₙ= Ibₙ₋ₘ;
pattern 2: in case that K2≤K1≤xK2, updating the second current value to make Ibₙ=(1-K1)*Ib;
pattern 3: in case that K1≥xK2, updating the second current value to make Ibₙ=(1-K1)*Ib *Y;
wherein Ib=α*C, K1 represents the current capacity cycle change rate, K2 represents the baseline capacity cycle change rate, C represents a rated capacity, α represents a lithium-plating-free coefficient, n represents a cycle number of fast-charging-cycle, and Υ represents an attenuation coefficient.

7. The charging method according to claim 3, wherein the step of assessing the risk of lithium plating of the battery further comprises:
after charging the battery according to the slow-charging-cycle mode, determining that the battery has no risk of lithium plating, so that the battery is charged according to the fast-charging-cycle mode in case that next charging is required.

8. The charging method according to claim 2, wherein the step of charging the battery according to the slow-charging-cycle mode comprises:
obtaining a state of charge value, an attenuation coefficient and a rated capacity of the battery;
determining a slow charging current according to the state of charge value, the attenuation coefficient and the rated capacity;
charging the battery with the slow charging current.

9. The charging method according to claim 8, wherein the step of determining the slow charging current according to the state of charge value, the attenuation coefficient and the rated capacity comprises:
determining an actual charged interval to which the state of charge value belongs;
determining an actual slow charging coefficient corresponding to the actual charged interval according to a preset correspondence relationship between charged intervals and slow charging coefficients, wherein in the preset correspondence relationship, an upper limit of each charged interval is negatively correlated with each slow charging coefficient;
determining the slow charging current according to a product of the actual slow charging coefficient, the attenuation coefficient and the rated capacity.

10. The charging method according to claim 2, wherein the step of in case that the battery has the risk of lithium plating, switching to the slow-charging-cycle mode for charging the battery comprises:
in case that the battery has the risk of lithium plating, updating a slow-charging-cycle count to make M=M+a, and consecutively charging the battery according to the slow-charging-cycle mode for M times, wherein a is an increment value for the slow-charging-cycle count after two adjacent assessments of the risk of lithium plating of the battery.

11. The charging method according to claim 1, wherein the fast-charging-cycle mode further comprises the step of:
prior to re-executing the step of pre-charging the battery at the first current value for the first duration T1, reducing the second current value.

12. The charging method according to claim 11, wherein the step of reducing the second current value comprises: reducing the second current value by an amplitude of 2% to 5%.

13. The charging method according to claim 1, wherein prior to pre-charging the battery at the first current value, the charging method further comprises the step of:
determining the first duration according to a state of charge value of the battery, wherein the step of determining the first duration comprises:
determining that the first duration is greater than 0 in case that the state of charge value is less than a state of charge threshold;
determining that the first duration is 0 in case that the state of charge value is greater than the state of charge threshold.

14. The charging method according to claim 1, wherein prior to charging the battery according to the fast-charging-cycle mode, the charging method further comprises the step of:
obtaining a target fast charging duration;
determining the first current value and the second duration according to the target fast charging duration, wherein both the first current value and the second duration are negatively correlated with the target fast charging duration.

15. An electronic device, comprising a processor, a communication interface, a memory and a communication bus, wherein the processor, the communication interface, and the memory communicate with each other through the communication bus;
the memory is configured to store a computer program;
the electronic device is configured to, in case that the computer program is executed by the processor, perform the method according to any one of claims 1-14.

16. An electric device, comprising a battery and a battery management system, wherein the battery management system is configured to charge the battery according to the method of any one of claims 1-14.
